# EUROPEAN PATENT APPLICATION

(11) **EP 1 621 387 A1**
(43) Date of publication of application: **01.02.2006**
(21) Application number: 04425594.1
(22) Date of filing: 30.07.2004
(51) Int. Cl.: B60J 11/00

(54) **Self-inflatable device for protection of motor vehicles from hail**

(71) Applicant: Valente, Riccardo, 35041 Campodarsego (Padova) (IT); Lago, Leopoldo, 35018 San Martino di Lupari (PD) (IT)
(72) Inventor: Valente, Riccardo, 35041 Campodarsego (Padova) (IT); Lago, Leopoldo, 35018 San Martino di Lupari (PD) (IT)
(74) Representative: Vinci, Marcello

(57) **Abstract**

It's a device for the protection of the auto vehicles (A) from the heal comprising at least one wrapper/support (B) applicable to the roof or to the glass of a motor vehicle, at least an inflatable structure (C) and at least a compressed gas or air tank or cylinder (S) with a control/opening valve (V) connected to said inflatable structure, and wherein the opening of said valve causes the introduction of the compressed gas or air of the tank or the cylinder into the inflatable structure (C), unfolding it on the motor vehicle.

## Description

This patent relates to the field of the protective covering for motor vehicles, and it particularly concerns a new covering specifically made for the protection of cars and motor vehicles in general from the hail.

The motor vehicles are continuously exposed to the inclemency of the weather, both during the ride, and while parked in open areas.

The coachworks of the motor vehicles are studied and realized to be resistant to the inclemency of the weather, such as frost, rain, sun, but they feel the negative effect of the heal.

Small hailstones, having low kinetic energy, bounce on the coachwork without damaging it.

Big hailstones, instead, heavily damage the coachwork and cause cracks on the glass, compelling the owner to expensive repairs.

Normally the motorists try to protect the cars moving them under fly-over, sheds, buildings, and so on, in the neighbourhood.

Sometimes it is not possible to shelter the car due to the lack of shelters in the neighbourhood, or to the traffic conditions that don't let the car reach any shelter.

In order to overcome to the above cited drawbacks a new device for the protection of the auto vehicles from the heal has been studied and carried out.

Main aim of the new anti-heal device is to protect the auto vehicle from the heal independently from the fact that in the neighbourhood there are no suitable shelters.

Other aim of the new anti-heal device is to have an easy and quick assembling and positioning on the auto vehicle that needs to be protect.

Other aim is to be comfortably housed in the car boot.

These and other direct and complementary aims are achieved by the new device for the protection of the auto vehicles from the heal comprising at least one inflatable structure, a compressed gas or air tank, a control/opening valve, a wrapper/support provided with devices for the fixing to the car coachwork.

The inflatable structure is made of a mattress or panel in plastic, flexible material with a shape substantially correspondent to that of a car.

Said panel, which constitutes the inflatable structure, has a width generically comparable to the sum of the width of the roof and the height of the two sides of the auto vehicle, and has length generically comparable to the sum of the length of the vehicle and of the front and back sides of the vehicle.

The panel of the inflatable structure, in particular, is made of two plastic flexible sheets coupled and thermo welded along the edge and in many internal points or lines.

The panel of the inflatable structure has at least an opening connected to the control/opening valve that is connected to the air or compressed gas tank.

The wrapper/support is adapted to contain said different parts and to permit its temporary positioning and fixing to the roof or to the glass of the auto vehicle.

For this reason the wrapper/support is provided with attaching or fixing elements to the roof of the auto vehicle, like, for example, magnets or suckers. In the case of vehicle with removable hood, the wrapper/support can be applied on the glass of the motor vehicle by means of suckers.

The operation of the valve causes the contemporary opening of the cover/support and the passing of the compressed gas or air from the tank into the panel of the inflatable structure.

The structure, while swelling, unfolds the cover and wraps the motor vehicle, protecting it from the heal.

Device for the protection of the auto vehicles from the heal comprising at least one wrapper/support applicable to the roof or to the glass of a motor vehicle, at least an inflatable structure and at least a compressed gas or air tank or cylinder with a control/opening valve connected to said inflatable structure, and wherein the opening of said valve causes the introduction of the compressed gas or air of the tank or the cylinder into the inflatable structure, unfolding it on the motor vehicle.

The characteristics of the new device for the protection of the motor vehicle from the heal will be better clarified by the description that follows, with reference to the attached drawing, as an illustrative and not restrictive example.

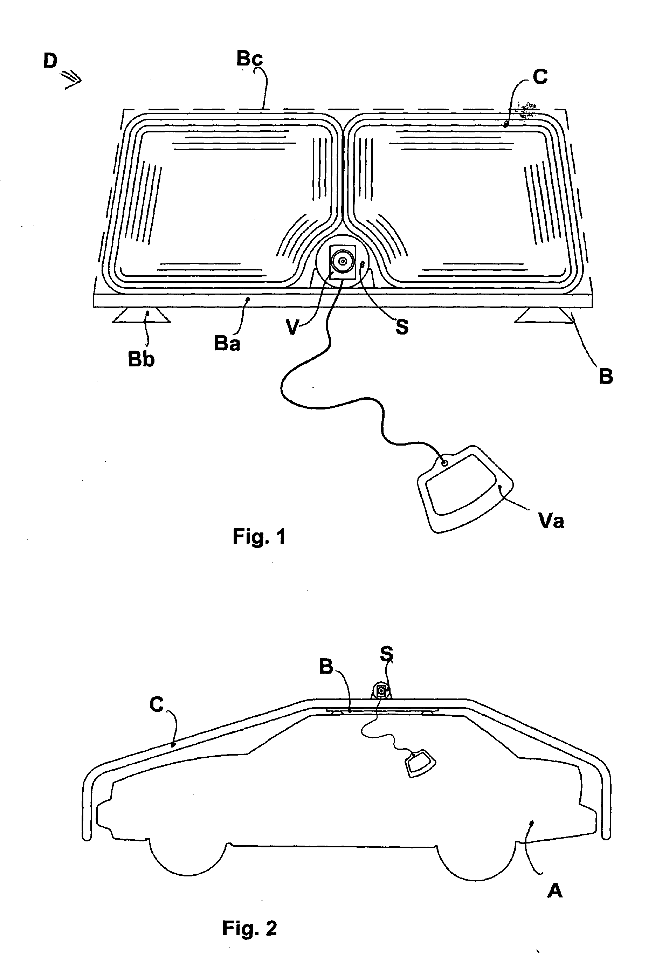

Figure 1 shows a schematic section of the new device (D) constituted, in its main parts, by a cover/support (B), an inflatable structure (C), at least a compressed gas or air tank (S) with control/opening valve (V).

The support/wrapper (B) is schematically represented by a level element (Ba) provided in the lower part with suckers (Bb) and in the upper part with a closing covering (Bc).

The suckers (Bb) allow to place and hold in position the new device (D) on the roof or on the glass of the motor vehicle (A) also in case of wind, or wet and slippery roof.

It is possible to foresee that the level element (Ba) is substituted by a simple soft cloth, while the suckers (Bb) can be substituted by one or more magnetic elements.

The closing covering (Bc) can be made of a simple plastic film, easy to open both by tear or by gas expansion, or it can be made of straps or hooks to be unhooked before opening the new device, or it can be made of walls that are hinged or united to the level element (Ba) of the support/wrapper (B), or by a rigid or semirigid cover secured to the level element (Ba).

The inflatable structure (C) is positioned in the upper part of the support/wrapper (B).

Said inflatable structure (C) is preferably made of two plastic and flexible sheets, coupled and thermo-welded along the edge and in many points or lines. The pneumatic bag that results is provided with at least one opening for the inflation and eventually at least one opening for the deflation.

Substantially said inflatable structure (C) has shape adapted to cover the motor vehicle.

At rest, that is before the utilization of said device, said inflatable structure is emptied of the internal air and adequately folded and put on the support/wrapper (B) in such a way to reduce the encumbrance.

On said support/wrapper (B), together with the inflatable structure (C), there is the tank or cylinder for the compressed gas or air (S).

Said tank (S) contains compressed gas or air in an amount big enough to completely inflate the structure (C), that is at pression high enough to provide it with enough rigidity.

Said tank (S) is provided with a control/opening valve (V), that is with a valve connected to the tank (S) and to the inflation opening of the structure (C).

A lever, handle (Va) or alike is connected to said valve (V) and it is projecting or accessible from outside the support/wrapper (B).

If the fixing of the new device (D) to the auto vehicle is obtained by means of suckers (Bb), it is possible to foresee that a mechanical and/or pneumatic system connected to the valve (V) amplify the anchoring force of the suckers (Bb) on the roof or on the glass of the auto vehicle (A). When the inflatable structure (C) is deflated, the suckers (Bb) decrease their anchoring force towards the roof of the auto vehicle (A) thus permitting to remove the new device (D).

It is also possible to foresee that the operation of the inflation valve (V) is realized by a radio electronic circuit so that the user can operate the new device (D) also at a short distance from the motorvehicle (A). The new device (D) such constituted is simply and fast to use. When it is necessary, the new device (D) is taken out of the boot and place on the roof or on the glass of the motor vehicle (A).

The suckers (Bb) and/or the magnetic part hold the new device (C) stable on the roof or on the glass of the motor vehicle (A).

Eventually, if necessary, the closing covering (Bc) is previously torn up and/or removed.

Moving the lever or pulling the handle (Va), the valve (V) of the tank or cylinder (S) is opened so that the compressed air or gar passes from the tank (S) to the inflatable structure (C).

At the beginning the pression of the compressed air or gas unfolds the inflatable structure (C) on the motor vehicle (A) overcoming the resistance offered by the elements of the closing covering (Bc), and then it adequately inflates said structure (C).

The structure (C), thus swollen, covers the motor vehicle (A) forming a barrier that acts as a cushioned pillow preventing the coachwork and the glass from the impact with the hail.

After its utilization the structure (C) is deflated: by removing the gas cylinder or tank (S), or by acting on the valve (V) of the tank (S), or by acting on the deflation valve. Afterwards the support/wrapper (B) is removed from the roof or from the glass of the motor vehicle (A) simply by lifting it overcoming the resistance of the suckers or of the magnetic element.

With reference to the above description the following claims are put forth.

## Claims

1. Device for the protection of the motor vehicles from the heal **characterized in that** it comprises at least one wrapper or support (B) applicable onto the roof or onto the glass of a motor vehicle (A), at least an inflatable structure (C) and at least a compressed gas or air tank or cylinder (S) with a control/opening valve (V) connected to said inflatable structure (C), and wherein the opening of said valve (V) causes the introduction of the compressed gas or air of the tank or the cylinder (S) into the inflatable structure (C), unfolding it on the motor vehicle (A).

2. Device for the protection of the motor vehicles from the heal of claim 1, wherein said inflatable structure (C) is made of a plastic inflatable cover with a shape adapted to cover the motor vehicle (A).

3. Device for the protection of the motor vehicles from the heal of claim 1, 2, wherein said inflatable structure (C) is preferably made of two or more plastic and flexible material sheets coupled and thermo welded along the edge and in various internal points or lines.

4. Device for the protection of the motor vehicles from the heal of claim 1, 2, 3, wherein said inflatable structure (C), when not utilized, is deprived of the internal air and folded on the support/wrapper (B).

5. Device for the protection of the motor vehicles from the heal of claim 1, 2, 3, 4, **characterized in that** it comprises a closing covering (Bc) adapted to hold the inflatable structure (C) folded and compact, and to allow its opening and unfolding due to inflation.

6. Device for the protection of the motor vehicles from the heal of claim 5, wherein the closing covering (Bc) is made of a breakable film for the closing of said inflatable structure (C) placed on the wrapper/support (B).

7. Device for the protection of the motor vehicles from the heal of claim 5, wherein the closing covering (Bc) is made of a removable cover for the closing of the inflatable structure (C) placed on the wrapper / support (B).

8. Device for the protection of the motor vehicles from the heal of claim 5, 6, 7, **characterized in that** it has one or more straps for the closing of said inflatable structure (C) placed on the wrapper / support (B).

9. Device for the protection of the motor vehicles from the heal of claim 5, **characterized in that** it has one or more hinged or removable walls, united to the level element (Ba) of the support/wrapper (B), for the closing of the inflatable structure (C), placed on the covering/support (B).

10. Device for the protection of the motor vehicles from the heal of previous claims, wherein said valve (V) is provided with a lever or handle (Va) openable by tear.

11. Device for the protection of the motor vehicles from the heal of previous claims, wherein said valve (V) is openable thanks to a radio-electronic circuit.

12. Device for the protection of the motor vehicles from the heal of previous claims, wherein the support/wrapper (B) is provided with suckers (Bb) adapted to hold the support (B), and so the whole device (D), in a stable position on the roof or on the glass of the motor vehicle (A).

13. Device for the protection of the motor vehicles from the heal of previous claims, wherein the inflation valve (V) is connected to a mechanical and or pneumatic device adapted to amplify the anchoring force of the suckers (Bb) towards the roof or the glass of the motor vehicle (A).

14. Device for the protection of the motor vehicles from the heal of previous claims, wherein the support/wrapper (B) is provided with magnetic elements adapted to hold the support (B), and so the whole device (D), in a stable position on the roof of the motor vehicle (A).
